# EUROPÄISCHE PATENTSCHRIFT

(11) **EP 0 959 704 B1**
(45) Veröffentlichungstag und Bekanntmachung des Hinweises auf die Patenterteilung: **23.10.2002**
(21) Anmeldenummer: 97914130.6
(22) Anmeldetag: 06.02.1997
(51) Int. Cl.: A43B 13/12

(54) **ATMUNGSAKTIVE LAUFSOHLE**
BREATHING SOLE
SEMELLE EXTERIEURE A ACTIVITE RESPIRATOIRE

(30) Priorität: 08.02.1996 DE 29601932 U
(43) Veröffentlichungstag der Anmeldung: 01.12.1999
(73) Patentinhaber: W.L. GORE & ASSOCIATES GmbH, 85640 Putzbrunn (DE)
(72) Erfinder: RAUCH, Max, D-82031 Grünwald (DE)
(86) Internationale Anmeldenummer: DE9700240
(87) Internationale Veröffentlichungsnummer: WO97028711

(56) Entgegenhaltungen:
- EP-A- 0 382 904
- DE-A- 4 214 802
- DE-C- 748 646

## Beschreibung

Die Erfindung betrifft eine atmungsaktive Laufsohle für ein Schuhwerk.

Bei der Herstellung von Schuhen kommen zwei herkömmlich verwendete Methoden zur Anbringung der Laufsohle auf die Unterseite der umgeschlagenen Schaftenden und der gegebenenfalls vorhandenen Brandsohle zum Tragen.
Eine Methode beinhaltet das Anspritzen oder Anvulkanisieren eines Laufsohlenmaterials. Beim Anspritzen oder Anvulkanisieren werden vorrangig Kunststoffe wie Polyurethan oder Polyvinylchlorid, oder Kautschuk verwendet. Diese Materialien sind nicht wasserdampfdurchlässig.

Eine weitere Methode beruht auf dem Ankleben von vorgeformten Laufsohlen. Diese Laufsohlen können aus Leder oder vorgeformten Kunststoffteilen bestehen. Die Kunststoffteile sind wiederum nicht wasserdampfdurchlässig.
Obwohl Leder an sich wasserdampfdurchlässig ist, wird durch das üblicherweise ganzflächige Aufbringen von nichtatmungsaktivem Kleber auf der Oberfläche der Laufsohle und/oder auf der Unterseite der umgeschlagenen Schaftenden und der gegebenenfalls vorhandenen Brandsohle, ein Durchtritt von Wasserdampf verhindert. Somit ist in beiden Fällen eine Atmungsaktivität bzw. ein Abtransport von Schweiß aus dem Schuhinnenraum zumindest über die Sohle nicht gegeben.

In den letzten Jahren sind die Ansprüche an den Tragekomfort von Schuhen erheblich gestiegen. Unter anderem hat sich das Problem des Feuchtigkeitstaues im Schuh als bedeutend herausgestellt.

Weiterhin hat es in der letzten Zeit viele Entwicklungen zur Herstellung eines wasserdichten, jedoch wasserdampfdurchlässigen Schuhes gegeben. Dabei konzentrierte man sich vor allem auf den Schuhschaft und die Brandsohle. Zur Anwendung kam dabei ein wasserdichtes, jedoch wasserdampfdurchlässiges Membranmaterial, mit dem der Schuh im Inneren auf unterschiedliche Weise abgedichtet und somit ein größerer Tragekomfort erreicht wurde. Bei diesen Schuhen kommt im allgemeinen eine wasserdichte wassserdampfundurchlässige angespritzte Kautschuk- oder Kunststofflaufsohle zum Einsatz.
Diese Laufsohlen bestehen aus elastischem Material und können in verschiedenen gestalterischen Ausführungen hergestellt werden. Als Material wird dabei z.B. Polyurethan, transparenter Kautschuk oder Polyvinylchlorid verwendet.

Durch die wasserfesten aber wasserdampfundurchlässigen Eigenschaften der Laufsohle wird jedoch eine Atmungsaktivität im Sohlenbereich blockiert. Dieser Nachteil führt zur Ansammlung von Schwitzfeuchtigkeit im Schuhinnenraum, besonders oberhalb der Sohle. Wünschenswert ist es jedoch, den Tragekomfort im Sohlenbereich auch von wasserdichtem Schuhwerk zu verbessern.

Aus der USA- 5,044,096 (EP-B-0 382 904) (Erfinder: Mario Polegato, Anmelder: Crocetta Del Montello) ist ein dreilagiger Sohlenaufbau für Schuhe bekannt, der eine mit Perforationen versehene Laufsohle, eine mit Perforationen versehene Brandsohle und dazwischen eine Funktionsschicht aus wasserdichtem, wasserdampfdurchlässigem Material aufweist. Dadurch soll die Möglichkeit geschaffen werden, Schwitzfeuchtigkeit in Form von Wasserdampf über diesen Sohlenaufbau abzuführen, ohne daß durch diesen Sohlenaufbau Wasser in den Schuh eindringen kann.

Problematisch ist bei diesem Aufbau die Perforation der Laufsohle. Grund dafür ist, daß das Funktionsschichtmaterial, wie es für wasserdichte, wasserdampfdurchlässige Bekleidungsstücke und Schuhe verwendet wird, mechanisch relativ empfindlich ist. Steinchen oder andere Fremdkörper, welche die Perforierung der Laufsohle dieses Sohlenaufbaus durchdringen, führen mit hoher Wahrscheinlichkeit zu einer Perforation der Funktionsschicht, wodurch die Wasserdichtheit dieses Sohlenaufbaus aufgehoben wird.

Ein weiterer Nachteil besteht darin, daß die tatsächlich zur Verfügung stehende Fläche zum Wasserdampfaustausch zu klein ist, um eine wirksame Atmungsaktivität der Sohle zu ermöglichen.
Kommen dann noch die Perforationen verstopfenden Steinchen oder Fremdkörper dazu, kann man nicht mehr von einer atmungsaktiven Sohle sprechen.
Zudem ist die Anordnung der Perforationen durch die Trittgestaltung der Sohlenunterseite in einschränkendem Maße vorgegeben.

Aus diesem Problemkomplex ergibt sich die Aufgabe, eine wirkungsvolle atmungsaktive Laufsohle sowohl für normales als auch wasserdichtes Schuhwerk zu entwickeln.

Diese Aufgabe wird erfindungsgemäß dadurch gelöst, daß die Laufsohle zweilagig ist, mit einer elastischen und wasserdampfdurchlässigen Innenlage und einer Außenlage, welche weniger als 70 % der Innenlage abdeckt. Bevorzugt ist dabei eine Abdeckung von weniger als 50%, insbesondere von weniger als 30%.

Durch die Kombination und Ausgestaltung dieser beiden Lagen wird eine ausgezeichnete Atmungsaktivität im Sohlenbereich gewährleistet.

In einer bevorzugten Ausführung ist die elastische und wasserdampfdurchlässige Innenlage mikroporös.
Die mikroporöse Struktur der Innenlage gewährleistet einen ungehinderten Wasserdampftransport. Dabei weißt die Innenlage vorzugsweise eine mittlere Porenweite von 3µm bis 250µm auf.

Die gewünschte Form der Innenlage kann aus diesem Material individuell zugeschnitten werden. Die Stärke des Innenlagenmaterials richtet sich nach den Anforderungen an die Sohle, insbesondere an einen ausreichenden Widerstand gegen äußere mechanische Einwirkungen. Dies ist dann von Bedeutung, wenn das Eindringen von spitzen Gegenständen, wie beispielsweise Steinen, verhindert werden soll.
Die Mikroporosität gewährleistet dabei einen optimalen Wasserdampftransport und bildet gleichzeitig, durch die geringe Porengröße, eine wirksame Barriere gegen das Eindringen von Kieseln, Staub etc.

Als Material für die Innenlage wird vorzugsweise ein gesinterter Kunststoff verwendet. Als Kunstoff eignet sich insbesondere Polyester, Polypropylen oder Polyethylen.

Ebenso können Filze, Vliese, Gewebe oder Gewirke aus Kunststoffen wie Polyester, Polypropylen oder Polyethylen zu einer funktionsfähigen Innenlage verarbeitet werden.

Gleichfalls besitzt die Innenlage in dieser Ausgestaltung die notwendige Elastizität, um als Teil einer Laufsohle Anwendung zu finden.

Weiterhin kann die Innenlage als Träger für die an ihr befestigten Teile der Außenlage dienen.

Ebenso ist es möglich, daß die Innenlage als Träger zusätzlicher vorteilhafter Schichten eingesetzt wird.

Die Ausgestaltung der Außenlage ist derart gewählt, daß die zum Wasserdampfaustausch verfügbare Oberfläche der Innenlage so wenig wie möglich eingeschränkt wird. Dies wird dadurch erreicht, daß die Außenlage weniger als 70 %, vorzugsweise weniger als 50 %, insbesondere weniger als 30 % der Innenlage bedeckt. Somit kann die hohe Atmungsintensität der Innenlage aufrechterhalten werden.

Die Außenlage kann mehrere nicht miteinander verbundene Einzelteilen enthalten oder aus einer vorgestanzten Form bestehen. Diese Einzelteile können angespritzt oder anvulkanisiert, oder angeklebt werden, die vorgestanzte Form wird angeklebt.

Der Aufbau der Außenlage wird zum einen durch einen den äußeren Konturen des in das Schuhwerk passenden Fußes entsprechenden Rand gebildet. Dieser äußere Rand hat vordergründig die Funktion, der Sohle einen stabilen äußeren Rahmen und damit sicheren Tritt zu geben.
Bei einer angespritzten Außenlage wird der Rand durch eine Ummantelung des äußeren Umfanges der Innenlage sowie der umgeschlagenen unteren Schaftenden gebildet.

Weiterhin wird die Außenlage in vorteilhafter Weise durch punkt- oder streifenförmige Elemente gebildet, insbesondere in Form von Noppen oder Rippen. Mit der punkt-oder streifenförmigen Ausführung der Außenlage wird erreicht, daß die Sohle einen festen und bequemen Tritt erhält und gleichzeitig nur eine geringe Fläche der Unterseite der Innenlage abgedeckt. Eine derartige Gestaltung der Außenlage, bei der weniger als 70% der Innenlage bedeckt ist, vermeidet auch weitestgehend ein sich Festsetzen von größeren Partikeln, z.B. Steinen in der Außenlage, was zu einem verminderten oder gar verhindertem Wasserdampfaustausch führen würde.

Mit einer derart ausgebildeten Außenlage kann ein weitgehend ungehindeter Wasserdampftransport durch die gesamte Sohle erfolgen. Auf diese Weise ist gewährleistet, daß die Schwitzfeuchtigkeit im Sohlenbereich abgeführt werden kann.

Ein geringer Teil der Unterseite der Innenlage wird trotz der vorteilhaften Ausgestaltung der Erfindung von den Teilen bzw. Elementen der Außenlage abgedeckt und geht somit für den Wasserdampfaustausch verloren. Auf der Schuhinnenseite der Außenlagenteile bzw. Außenlagenform können sich aus diesem Grund Wasserdampfpartikel anstauen.

In einer bevorzugten Ausführungsform weist daher die Innenlage Öffnungen auf, durch die Elemente der Außenlage derart gespritzt sind, daß die Öffnungen gefüllt und die Elemente an der Innenlage verankert sind. Somit können die Wasserdampfpartikel zusätzlich entlang der Öffnungen nach außen gelangen und eine optimale Belüftung der Sohle ist gewährleistet.

In einer weiteren Ausführung der Erfindung kann die Mikrostruktur der Innenlage derart gestaltet werden, daß sie zusätzlich hydrophobe Eigenschaften enthält bzw. wasserdicht ist. Dies wird durch eine entsprechende Herstellung des gesinterten Kunststoffes realisiert. Um dies zu erreichen, ist es z.B. möglich, gesintertes Polyethylen in hochmolekularem oder ultrahochmolekularem Zustand zu bearbeiten.

Außerdem kann auf die Innenlage eine wasserdichte und wasserdampfdurchlässige Funktionsschicht, vorzugsweise aus mikroporösem, gerecktem PTFE aufgebracht werden. Damit ist es ebenfalls möglich, die Sohle wasserdicht zu gestalten. In diesem Falle ist die Beschaffenheit bzw. Mikroporosität der Innenlage von Vorteil, da diese das Eintreten von spitzen oder reibenden Partikeln, z.B. Sand ausschließt und somit die Funktionsschicht vor mechanischen Schäden bewahrt.

Die erfindungsgemäße Laufsohle kann in jeder Art Schuhwerk Anwendung finden.

Im folgenden wird ein Ausführungsbeispiel der Erfindung anhand von Zeichnungen näher erläutert. Es zeigen:
Fig. 1 einen Längsschnitt der Sohle, bestehend aus Innenlage (1) und Außenlage (2)
Fig. 2 eine Draufsicht auf die Laufsohlenunterseite (11) mit Noppen (4a)
Fig. 3 eine Draufsicht auf die Laufsohlenunterseite (11) mit Rippen (4b)
Fig. 4 einen Schnitt der Laufsohle (11) mit angespritztem, punktförmigen Außenlagenteil 4a)
Fig. 5 einen Schnitt der Laufsohle (11) mit verankertem, punktförmigen Außenlagenteil (4a, 4b)
Fig. 6 atmungsaktive Laufsohle (11) mit Funktionsschicht (8)
Fig. 7 einen Schuh mit atmungsaktiver Laufsohle (11)

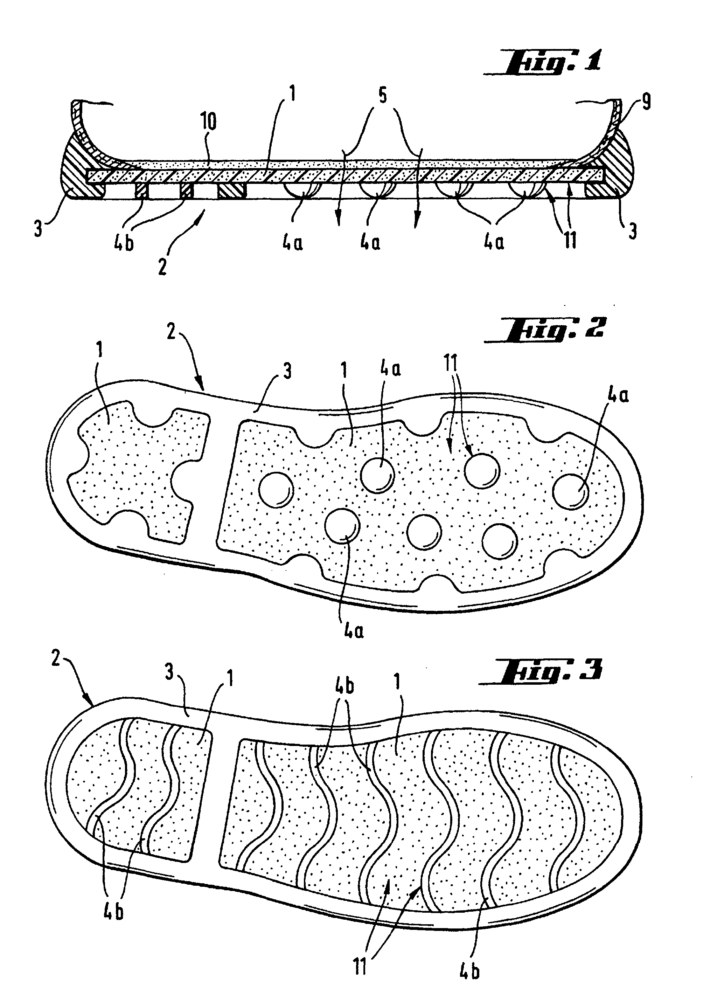

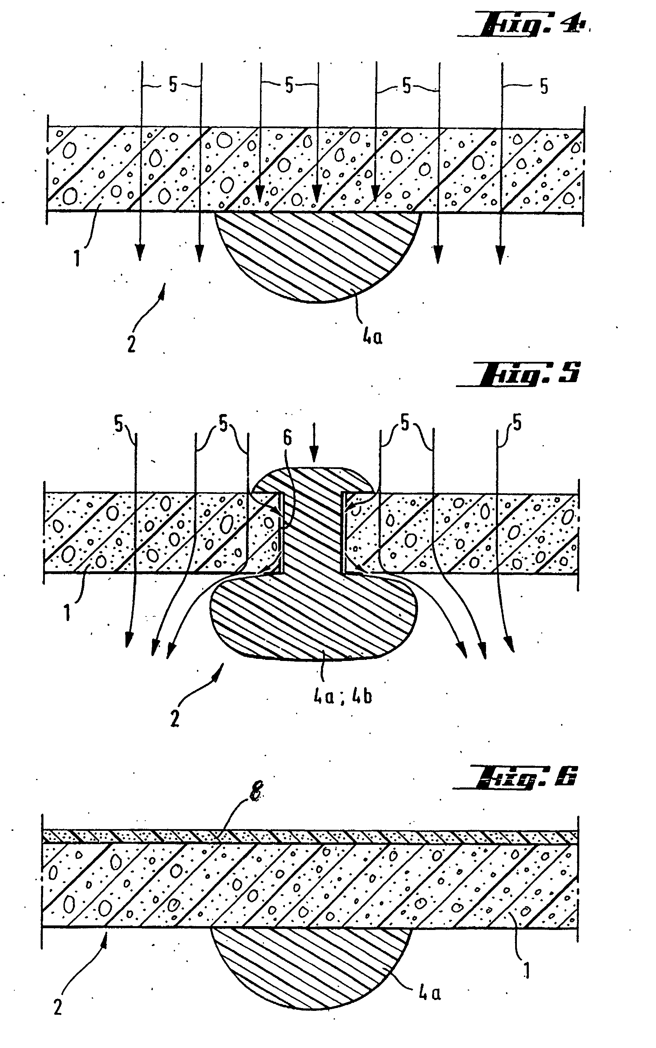

Fig.1 zeigt eine Sohle mit einem Schaft 9, einer Brandsohle 10 sowie der erfindungsgemäßen Laufsohle 11. Die Laufsohle 11 enthält eine elastische und mikroporöse Innenlage 1 und eine Außenlage 2. Die Innenlage 1 besteht vorzugsweise aus gesintertem Kunststoff. Als Materialien kommen dafür Polyethylen, Polypropylen oder Polyester in Frage.
Die mikroporöse Struktur der Innenlage 1 ist wasserdampfdurchlässig. Somit ist ein Abführen der Schwitzfeuchtigkeit 5 aus dem Schuhinnenraum gesichert. Weiter dient die Innenlage 1 als Träger einer Außenlage 2.

An der Unterseite der Innenlage 1 ist die Außenlage 2 angebracht.
Die Außenlage 2 wird vorzugsweise durch Anspritzen allgemein dafür verwendeter Kunststoffe, wie z.B Polyurethan, Polyvinylchlorid, angebracht. Die mehrteilige Außenlage 2 setzt sich aus der Ummantelung 3 des äußeren Umfanges der Innenlage sowie des Schaftes 9 und den an der Unterseite der Innenlage 1 angespritzten Elementen 4a oder 4b zusammen. Die Ummantelung 3 hat hauptsächlich die Funktion, der Schuhsohle einen festen Halt und Tritt zu geben.
Durch den Vorgang des Anspritzens geht ein Teil der Oberfläche der Innenlage 1 für den Wasserdampfaustausch verloren. Um die hohe Atmungsaktivität der Innenlage 1 jedoch aufrecht zu erhalten, ist die Außenlage 2 besonders gestaltet. So sind die Teile der Außenlage 2 derart gebildet, daß die zum Wasserdampfaustausch verfügbare Fläche der Innenlage 1 so wenig wie möglich eingeschränkt wird.
Dies geschieht vorzugsweise durch das Anspritzen von punkt- 4a oder streifenförmigen 4b Elementen. Besonders bevorzugte Ausführungen dazu sind Noppen 4a oder Rippen 4b.

Das Abführen von Schwitzfeuchtigkeit 5 vom Schuhinnenraum erfolgt durch die Mikroporen der Innenlage 1 hindurch und an den Teilen 3, 4a, 4b der Außenlage 2 vorbei an die Umgebung.

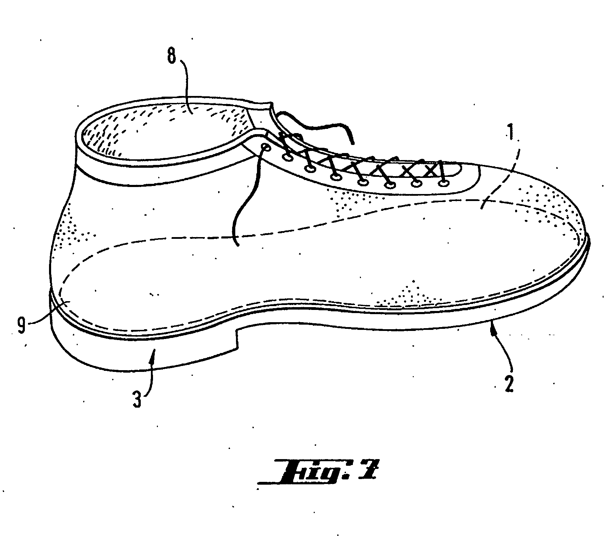

Figur 2 zeigt, wie die Außenlage 2 mit Noppen 4a angeordnet sein kann.

In Figur 3 ist die Außenlage 2 mit Rippen 4b ausgestattet.

Die Figuren 2 und 3 verdeutlichen, daß die Außenlage 2 weniger als 70 % der Innenlage 1 abdeckt.

In den weiteren Figuren 4 und 5 wird das atmungsaktive Verhalten der Innenlage 1 in Abhängigkeit von der Außenlage 2 dargestellt. Figur 4 zeigt eine erfindungsgemäße Laufsohle mit einer Innenlage 1 und einem angespritzten Element 4a der Außenlage 2. Das Verhalten des Wasserdampfes 5 beim Durchgang durch die Innenlage 1 wird durch den Lauf der Pfeile verdeutlicht. Aus dieser Figur ist ersichtlich, daß an der Stelle, wo das Element 4a an die Innenlage 1 gespritzt ist, ein Ausgang für den Wasserdampf 5 aus der Innenlage 1 versperrt ist und es somit zu einer Ansammlung von Wasserdampfpartikeln kommt.

Zur Vermeidung dieser Problematik kommt eine wie in Figur 5 dargestellte weitere vorteilhafte Ausführungsform zur Anwendung, bei der das Element 4a der Außenlage 1 durch entsprechende Öffnungen 6 in der Innenlage 1 durchgespritzt und auf der Innenseite der Innenlage 1 verankert ist. Bei diese Ausführungsform erfolgt kein äußerer Verschluß der mikroporösen Struktur der Innenlage 1, da der Wasserdampf 5 entlang der Öffnung 6 entweichen kann.

Die Gestaltung einer atmungsaktiven und wasserdichten Schuhsohle kann weiterhin durch die Verwendung einer Funktionsschicht oberhalb der Innenlage 1 erreicht werden. Eine bevorzugte Anordnung wird in Figur 6 gezeigt. Eine Laufsohle 11 ist oberhalb der Innenlage 1 mit einer Funktionsschicht 8 versehen. Die Innenlage 1 ist hier zusätzlich zu den atmungaktiven Eigenschaften Träger für die Funktionsschicht 8. Diese Funktionsschicht 8 besteht aus einem wasserdichten und wasserdampfdurchlässigen Membranmaterial und kann vorzugsweise auf die Sohle aufgebügelt werden.
Für die Funktionsschicht 8 geeignete Materialien umfassen mikroporöses gestrecktes Polytetraflurethylen (PTFE), wie es in den US-Patentschriften 3,953,566 und 4,187,390 beschrieben ist; gerecktes PTFE, das mit hydrophilen Imprägniermitteln und/oder Schichten versehen ist, wie es in der US-PS 4,194,041 beschrieben ist; atmungsfähige Polyurethanschichten; oder Elastomere, wie Copolyetherester und deren Laminate, wie es in den US-Patentschriften 4,725,481 und 4,493,870 beschrieben ist.

Die erfindungsgemäße Lösung einer atmungsaktiven Laufsohle ist bei allen Schuhen anwendbar (Fig.7).
Zur Verwendung bei atmungsaktiven und wasserdichten Schuhwerken kann der gesamte Schuhinnenraum zusätzlich mit einer Funktionsschicht 8 ausgerüstet sein.

## Patentansprüche

1. Atmungsaktive Laufsohle (11) für Schuhwerk,
**dadurch gekennzeichnet,**
**daß** die Laufsohle (11) zweilagig ist, mit einer elastischen und wasserdampfdurchlässigen Innenlage (1) und einer Außenlage (2), welche weniger als 70 % der Innenlage abdeckt.

2. Atmungsaktive Laufsohle (11) nach Anspruch 1,
**dadurch gekennzeichnet,**
**daß** die Außenlage (2) weniger als 50 % der Innenlage (1) bedeckt.

3. Atmungsaktive Laufsohle (11) nach den Ansprüchen 1 bis 2,
**dadurch gekennzeichnet,**
**daß** die Außenlage (2) weniger als 30 % der Innenlage (1) bedeckt.

4. Atmungsaktive Laufsohle (11) nach einem der Ansprüche 1 bis 3,
**dadurch gekennzeichnet,**
**daß** die elastische und wasserdampfdurchlässige Innenlage (1) mikroporös ist.

5. Atmungsaktive Laufsohle (11) nach einem der Ansprüche 1 bis 4,
**dadurch gekennzeichnet,**
**daß** die Innenlage (1) aus gesintertem Kunststoff hergestellt ist.

6. Atmungsaktive Laufsohle (11) nach Anspruch 5,
**dadurch gekennzeichnet,**
**daß** der gesinterte Kunststoff aus Polyester, Polypropylen oder Polyethylen ist.

7. Atmungsaktive Laufsohle (11) nach einem der Ansprüche 1 bis 6,
**dadurch gekennzeichnet,**
**daß** die Innenlage (1) ein Filz, ein Vlies, ein Gewebe oder ein Gewirke ist.

8. Atmungsaktive Laufsohle (11) nach einem der Ansprüche 1 bis 7,
**dadurch gekennzeichnet,**
**daß** die Innenlage (1) eine mittlere Porenweite von 3 µm bis 250 µm aufweist.

9. Atmungsaktive Laufsohle (11) nach den Ansprüchen 1 bis 8,
**dadurch gekennzeichnet,**
**daß** die Außenlage (2) eine Kombination mehrerer nicht miteinander verbundenen Einzelteile ist.

10. Atmungsaktive Laufsohle (11) nach den Ansprüchen 1 bis 9,
**dadurch gekennzeichnet,**
**daß** die Außenlage (2) eine vorgestanzte Form ist.

11. Atmungsaktive Laufsohle (11) nach den Ansprüchen 1 bis 10,
**dadurch gekennzeichnet,**
**daß** mindestens ein Teil der Außenlage (2) durch einen den äußeren Konturen des in das Schuhwerk passenden Fußes entsprechenden Rand gebildet wird.

12. Atmungsaktive Laufsohle (11) nach einem der Ansprüche 1 bis 11,
**dadurch gekennzeichnet,**
**daß** das Schuhwerk mit einem Schuhschaft (9) ausgestattet ist und daß der Rand durch eine Ummantelung des äußeren Umfanges der Innenlage (1) sowie des Schaftes (9) gebildet wird.

13. Atmungsaktive Laufsohle (11) nach einem der Ansprüche 1 bis 12,
**dadurch gekennzeichnet,**
**daß** die Außenlage (2) zu einem Teil punkt- (4a) oder streifenförmige(4b) Elementen enthält.

14. Atmungsaktive Laufsohle (11) nach Anspruch 13,
**dadurch gekennzeichnet,**
**daß** die Außenlage (2) zu einem Teil aus Noppen (4a) oder Rippen (4b) gebildet wird.

15. Atmungsaktive Laufsohle (11) nach den Ansprüchen 1 bis 14,
**dadurch gekennzeichnet,**
**daß** die Außenlage (2) angespritzt oder anvulkanisiert ist.

16. Atmungsaktive Laufsohle (11) nach den Ansprüchen 1 bis 14,
**dadurch gekennzeichnet,**
**daß** die Außenlage (2) angeklebt ist.

17. Atmungsaktive Laufsohle (11) nach einem der Ansprüche 1 bis 16,
**dadurch gekennzeichnet,**
**daß** die Innenlage (1) Öffnungen (6) aufweist, durch die die Einzelteile der Außenlage (2) derart gespritzt sind, daß die Öffnungen (6) gefüllt und die Elemente an der Innenlage (1) verankert sind.

18. Atmungsaktive Laufsohle (11) nach einem der Ansprüchen 1 bis 17,
**dadurch gekennzeichnet,**
**daß** die Außenlage (2) aus Polyurethan oder Polyvinylchlorid ist.

19. Atmungsaktive Laufsohle (11) nach einem der Ansprüche 1 bis 18,
**dadurch gekennzeichnet,**
**daß** die Innenlage (1) zusätzlich mit hydrophoben Eigenschaften ausgerüstet ist.

20. Atmungsaktive Laufsohle (11) nach einem der Ansprüche 1 bis 19,
**dadurch gekennzeichnet,**
**daß** die Innenlage (1) wasserdicht ist.

21. Atmungsaktive Laufsohle (11) nach einem der Ansprüche 1 bis 20,
**dadurch gekennzeichnet,**
**daß** auf der Oberseite der Innenlage (1) zusätzlich eine wasserdichte und wasserdampfdurchlässige Funktionsschicht (8) aufgebracht ist.

22. Atmungsaktive Laufsohle (11) nach Anspruch 21,
**dadurch gekennzeichnet,**
**daß** die wasserdichte und wasserdampfdurchlässige Funktionsschicht (8) aus mikroporösem gerecktem PTFE besteht.

23. Schuhwerk mit atmungsaktiver Laufsohle (11) nach einem der Ansprüche 1 bis 22.

## Claims

1. Breathable outsole (11) for footwear, **characterized in that** the outsole (11) is two-layered, with an elastic and water-vapour-permeable inner layer (1) and an outer layer (2), which covers less than 70% of the inner layer.

2. Breathable outsole (11) according to Claim 1, **characterized in that** the outer layer (2) covers less than 50% of the inner layer (1).

3. Breathable outsole (11) according to Claims 1 and 2, **characterized in that** the outer layer (2) covers less than 30% of the inner layer (1).

4. Breathable outsole (11) according to one of Claims 1 to 3, **characterized in that** the elastic and water-vapour-permeable inner layer (1) is microporous.

5. Breathable outsole (11) according to one of Claims 1 to 4, **characterized in that** the inner layer (1) is produced from sintered plastic.

6. Breathable outsole (11) according to Claim 5, **characterized in that** the sintered plastic is of polyester, polypropylene or polyethylene.

7. Breathable outsole (11) according to one of Claims 1 to 6, **characterized in that** the inner layer (1) is a felt, a nonwoven, a woven or a knitted fabric.

8. Breathable outsole (11) according to one of Claims 1 to 7, **characterized in that** the inner layer (1) has an average pore width of 3 µm to 250 µm.

9. Breathable outsole (11) according to Claims 1 to 8, **characterized in that** the outer layer (2) is a combination of a plurality of individual parts which are not joined to one another.

10. Breathable outsole (11) according to Claims 1 to 9, **characterized in that** the outer layer (2) is a prepunched form.

11. Breathable outsole (11) according to Claims 1 to 10, **characterized in that** at least part of the outer layer (2) is formed by a border corresponding to the outer contours of the foot fitting into the footwear.

12. Breathable outsole (11) according to one of Claims 1 to 11, **characterized in that** the footwear is provided with an upper (9) and **in that** the border is formed by an encapsulation of the outer periphery of the inner layer (1) and of the upper (9).

13. Breathable outsole (11) according to one of Claims 1 to 12, **characterized in that** the outer layer (2) partly includes elements in point form (4a) or strip form (4b).

14. Breathable outsole (11) according to Claim 13, **characterized in that** the outer layer (2) is partly formed by studs (4a) or ribs (4b).

15. Breathable outsole (11) according to Claims 1 to 14, **characterized in that** the outer layer (2) is moulded-on or vulcanized-on.

16. Breathable outsole (11) according to Claims 1 to 14, **characterized in that** the outer layer (2) is adhesively cemented-on.

17. Breathable outsole (11) according to one of Claims 1 to 16, **characterized in that** the inner layer (1) has openings (6), through which the individual parts of the outer layer (2) are injection-moulded in such a way that the openings (6) are filled and the elements are anchored on the inner layer (1).

18. Breathable outsole (11) according to one of Claims 1 to 17, **characterized in that** the outer layer (2) is of polyurethane or polyvinyl chloride.

19. Breathable outsole (11) according to one of Claims 1 to 18, **characterized in that** the inner layer (1) is additionally finished with hydrophobic properties.

20. Breathable outsole (11) according to one of Claims 1 to 19, **characterized in that** the inner layer (1) is waterproof.

21. Breathable outsole (11) according to one of Claims 1 to 20, **characterized in that** a waterproof and water-vapour-permeable functional layer (8) is additionally applied on the top side of the inner layer (1).

22. Breathable outsole (11) according to Claim 21, **characterized in that** the waterproof and water-vapour-permeable functional layer (8) consists of microporous stretched PTFE.

23. Footwear with a breathable outsole (11) according to one of Claims 1 to 22.

## Revendications

1. Semelle extérieure à activité respiratoire (11) pour chaussures, **caractérisée en ce que** la semelle extérieure (11) est en deux couches, avec une couche interne (1) élastique et perméable à la vapeur d'eau et une couche externe (2), qui recouvre moins de 70 % de la couche interne.

2. Semelle extérieure à activité respiratoire (11) selon les revendications 1, **caractérisée en ce que** la couche externe (2) recouvre moins de 50 % de la couche interne (1).

3. Semelle extérieure à activité respiratoire (11) selon les revendications 1 à 2, **caractérisée en ce que** la couche externe (2) recouvre moins de 30 % de la couche interne (1).

4. Semelle extérieure à activité respiratoire (11) selon l'une quelconque des revendications 1 à 3, **caractérisée en ce que** la couche interne (1) élastique et perméable à la vapeur d'eau est microporeuse.

5. Semelle extérieure à activité respiratoire (11) selon l'une quelconque des revendications 1 à 4, **caractérisée en ce que** la couche interne (1) est fabriquée à partir de plastique fritté.

6. Semelle extérieure à activité respiratoire (11) selon la revendication 5, **caractérisée en ce que** le plastique fritté est du polyester, du polypropylène ou du polyéthylène.

7. Semelle extérieure à activité respiratoire (11) selon l'une quelconque des revendications 1 à 6, **caractérisée en ce que** la couche interne (1) est un feutre, un non tissé, un tissu ou un tissu à mailles.

8. Semelle extérieure à activité respiratoire (11) selon l'une quelconque des revendications 1 à 7, **caractérisée en ce que** la couche interne (1) présente une largeur de pores moyenne de 3 µm à 250 µm.

9. Semelle extérieure à activité respiratoire (11) selon les revendications 1 à 8, **caractérisée en ce que** la couche externe (2) est une combinaison de plusieurs pièces individuelles non assemblées les unes aux autres.

10. Semelle extérieure à activité respiratoire (11) selon les revendications 1 à 9, **caractérisée en ce que** la couche externe (2) est une forme prédécoupée.

11. Semelle extérieure à activité respiratoire (11) selon les revendications 1 à 10, **caractérisée en ce qu'**au moins une partie de la couche externe (2) est formée par un bord correspondant aux contours extérieurs du pied s'adaptant dans la chaussure.

12. Semelle extérieure à activité respiratoire (11) selon l'une quelconque des revendications 1 à 11, **caractérisée en ce que** la chaussure est pourvue d'une empeigne de chaussure (9) et **en ce que** le bord est formé par un enrobage du pourtour extérieur de la couche interne (1) ainsi que de l'empeigne (9).

13. Semelle extérieure à activité respiratoire (11) selon l'une quelconque des revendications 1 à 12, **caractérisée en ce que** la couche externe (2) contient en partie des éléments en forme de points (4a) ou en forme de bandes (4b).

14. Semelle extérieure à activité respiratoire (11) selon la revendication 13, **caractérisée en ce que** la couche externe (2) est formée en partie par des nopes (4a) ou des nervures (4b).

15. Semelle extérieure à activité respiratoire (11) selon les revendications 1 à 14, **caractérisée en ce que** la couche externe (2) est appliquée par pulvérisation ou par vulcanisation.

16. Semelle extérieure à activité respiratoire (11) selon les revendications 1 à 14, **caractérisée en ce que** la couche externe (2) est collée.

17. Semelle extérieure à activité respiratoire (11) selon l'une quelconque des revendications 1 à 16, **caractérisée en ce que** la couche interne (1) présente des ouvertures (6) à travers lesquelles les pièces individuelles de la couche externe (2) sont pulvérisées de telle sorte que les ouvertures (6) soient remplies et que les éléments soient ancrés sur la couche interne (1).

18. Semelle extérieure à activité respiratoire (11) selon l'une quelconque des revendications 1 à 17, **caractérisée en ce que** la couche externe (2) est du polyuréthanne ou du chlorure de polyvinyle.

19. Semelle extérieure à activité respiratoire (11) selon l'une quelconque des revendications 1 à 18,
**caractérisée en ce que** la couche interne (1) est en outre pourvue de propriétés hydrophobes.

20. Semelle extérieure à activité respiratoire (11) selon l'une quelconque des revendications 1 à 19, **caractérisée en ce que** la couche interne (1) est étanche à l'eau.

21. Semelle extérieure à activité respiratoire (11) selon l'une quelconque des revendications 1 à 20, **caractérisée en ce qu'**on applique en outre à la surface supérieure de la couche interne (1) une couche fonctionnelle (8) étanche à l'eau et perméable à la vapeur d'eau.

22. Semelle extérieure à activité respiratoire (11) selon la revendication 21, **caractérisée en ce que** la couche fonctionnelle (8) étanche à l'eau et perméable à la vapeur d'eau se compose de PTFE étiré microporeux.

23. Chaussure à semelle extérieure à activité respiratoire (11) selon l'une quelconque des revendications 1 à 22.
